# EUROPEAN PATENT APPLICATION

(11) **EP 1 867 369 A1**
(43) Date of publication of application: **19.12.2007**
(21) Application number: 06730260.4
(22) Date of filing: 28.03.2006
(51) Int. Cl.: A63F 13/00, A63F 13/10

(54) **GAME DEVICE AND GAME EXECUTION CONTROL METHOD**

(30) Priority: 31.03.2005 JP 2005105300
(71) Applicant: Konami Digital Entertainment Co., Ltd., Tokyo 107-8324 (JP)
(72) Inventor: UCHIYAMA, Satoshi, c/o Konami Digital Ent. Co. Ltd, Tokyo 1078324 (JP); TAKAHASHI, Naoki, c/o Konami Digital Ent. Co. Ltd., Tokyo 1078324 (JP); FUJIWARA, Yutaka, c/o Konami Digital Ent. Co. Ltd., Tokyo 1078324 (JP)
(74) Representative: Müller-Boré & Partner Patentanwälte
(86) International application number: PCT/JP2006/306312
(87) International publication number: WO 2006/106679

(57) **Abstract**

A game apparatus according to the present invention designed to display a player's character and an opponent character on a monitor 3 in such a manner as to allow the player's character to take an action for a match according to an instruction from the player to thereby obtain a result in accordance with a predetermined rule. The game apparatus comprises a card-mounting section 2 having a mounting surface 20 for mounting thereon an athlete card 9, an image pickup section 11 adapted to detect a card-mounted position where the card is mounted on the mounting surface, a ROM 3001 adapted to store an action of the player's character, and an attribute defining a mode of this action in a plurality of preset levels, in associated relation, and an action-setting section 305 adapted to set the attribute corresponding to an action of the player's character instructed by the player, at one of the levels, depending on the card-mounted position detected by the image pickup section 11. The game apparatus of the present invention makes it possible to arbitrarily change a mode of the action of the player's character so as to provide a highly-diverse game.

## Description

### TECHNICAL FIELD

The present invention relates to a game apparatus comprising image display control means which is adapted to display a player's character and an opponent character on a display unit in such a manner as to allow the player's character to take an action for a match according to an instruction from the player to thereby obtain a result in accordance with a predetermined rule. The present invention also relates to a technique of controlling execution of such a game.

### BACKGROUND ART

The following Patent Publication 1 discloses a card game apparatus using a plurality of athlete cards having unique data written in a back side thereof. The card game apparatus is designed to allow a part of the athlete cards selected by a player in a number required for making up a team to be mounted on a playing field, and then read respective unique data written in the mounted athlete cards by an image sensor, so as to create a game image including corresponding athlete images according to the read data and display the game image on a display unit. In this card game, a player can change an arrangement of the athlete cards on the playing field to give an instruction for changing respective positions and a formation of the athletes. This makes it possible to change a level of athletic ability as the entire team so as to achieve enhanced diversity in the game.

The card game apparatus disclosed in the Patent Publication 1 is intended to solely play a team game which is designed to allow a player to give an instruction for changing respective positions and a formation of the athletes depending on where each of the athlete cards is arranged on the playing field by the player, so as to change a level of athletic ability as the entire team. That is, the card game apparatus is not designed to change game-related information of each of the athletes. Thus, there is a certain limit on amusement of the game.

In view of the above situation, the present invention is directed to pre-define an attribute about an action to be instructed for a player's character, such as an athlete to be displayed on a display unit, and set a content of the attribute depending of a mounted position of a card, so as to provide a game apparatus and a game execution method capable of achieving variations in the action of the player's character, even though the apparatus and method are designed to play a game by mounting the card on a mounting surface.

Patent Publication 1: JP 2002-301264A

### DISCLOSURE OF THE INVENTION

In order to solve the above problem, according to one aspect of the present invention, there is provided a game apparatus including image display control means which is adapted to display a player's character and an opponent character on a display unit in such a manner as to allow the player's character to take an action for a match according to an instruction from the player to thereby obtain a result in accordance with a predetermined rule. The game apparatus comprises a card-mounting section having a mounting surface for mounting thereon a card with a predetermined shape, a position detection section adapted to detect a card-mounted position where the card is mounted on the mounting surface, a storage section adapted to store an action of the player's character, and an attribute defining a mode of the action in a plurality of preset levels, in associated relation, and action-setting means adapted to set the attribute corresponding to an action of the player's character instructed by the player, at one of the levels, depending on the card-mounted position detected by the position detection section.

In the game apparatus of the present invention, respective images of the player's character and the opponent character are displayed on the display unit, and the game is played through these characters. Specifically, in response to mounting the predetermined shaped card on the mounting surface of the card-mounting section, the card-mounted position on the mounting surface is detected by the position detection section. Further, according to an instruction from the player to the player's character displayed on the display unit, based on the mounting of the card relative to the mounting surface, an action for the match will be carried out through the player's character to obtain a result in accordance with the predetermined rule. More specifically, an action of the player's character and an attribute defining a mode of the action in a plurality of preset levels are stored in the storage section in associated relation, and, depending on the card-mounted position detected by the position detection section, the attribute corresponding to an action of the player's character instructed by the player is set at one of the levels by the action-setting means. Thus, when the player's character takes an action on the display unit, the attribute defining a mode of this action is set at one of the levels, depending on where the card is mounted on the mounting surface. This makes it possible to arbitrarily change a mode of the action of the player's character so as to provide a highly-diverse game. For example, when the player's character is a pitcher or hitter character in a baseball game, depending on whether the card is mounted on the mounting surface, a pitched-ball speed of a ball character configured to simulate a ball will be variably set as a level of an attribute representing a pitching power of the player's character, or a swing speed of a bat character configured to simulate a bat will be variably set as a level of an attribute representing a swing power of the player's character.

### BRIEF DESCRIPTION OF THE DRAWINGS

FIG 1 is a schematic external view showing a game apparatus according to one embodiment of the present invention.
FIG 2 is a perspective view showing one example of the configuration of a card-mounting section.
FIG 3 illustrates the configuration of an athlete card and a relationship with a mounting surface, wherein A is a perspective view showing the configuration of the athlete card and the relationship with the mounting surface, and B is a schematic diagram showing a mark which is marked on a bottom surface of the athlete card.
FIG. 4 is a side sectional view of the game apparatus.
FIG. 5 is a front view of the game apparatus.
FIG 6 is a block diagram showing a hardware comprising a control unit incorporated in a control board section, and various sections.
FIG 7 is a block diagram for explaining a function of the control unit.
FIG 8 is a flowchart showing a general flow of a game process.
FIG. 9 is a flowchart showing a pitching/batting subroutine included in a sequence execution processing in Step S5 illustrated in FIG. 8.
FIG. 10 is a flowchart showing a tactical-item setting subroutine included in a strategy setting/display processing in Step S23 illustrated in FIG. 9.
FIG. 11 is a flowchart showing a hitting determination processing in Step S33 illustrated in FIG 9.
FIG 12 illustrates a game image for guiding a selection of strategic items.
FIG. 13 illustrates a game image for guiding a selection of tactical items, in case where a player plays the game on the side of a pitcher.
FIG. 14 illustrates a game image for guiding a selection of tactical items, in case where a player plays the game on the side of a hitter.
FIG 15 illustrates a game image for guiding a selection of directive items, in case where a player plays the game on the side of a pitcher.
FIG. 16 illustrates a game image for guiding a selection of directive items, in case where a player plays the game on the side of a hitter.

### BEST MODE FOR CARRYING OUT THE INVENTION

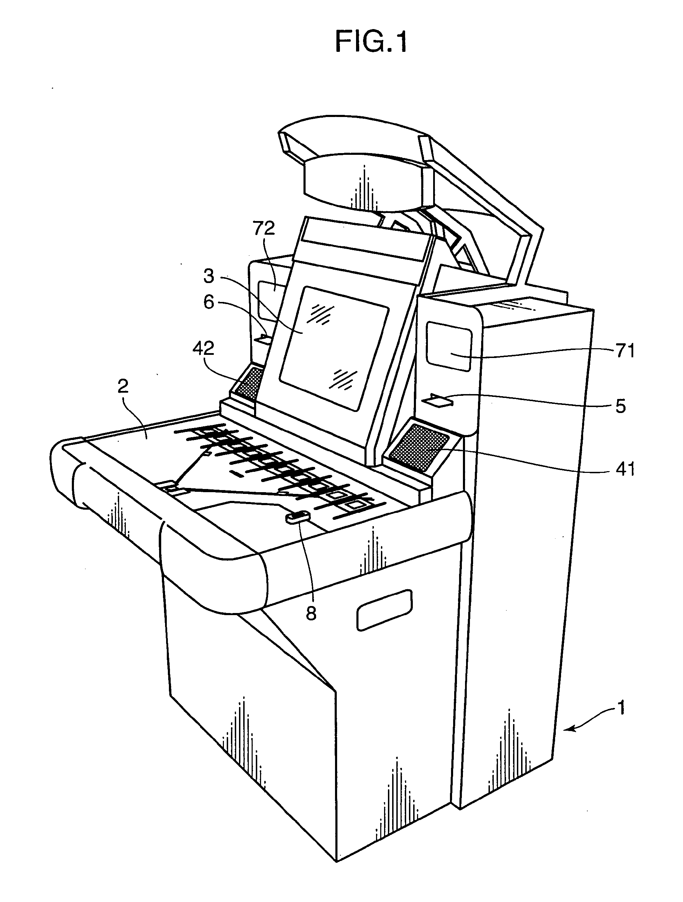

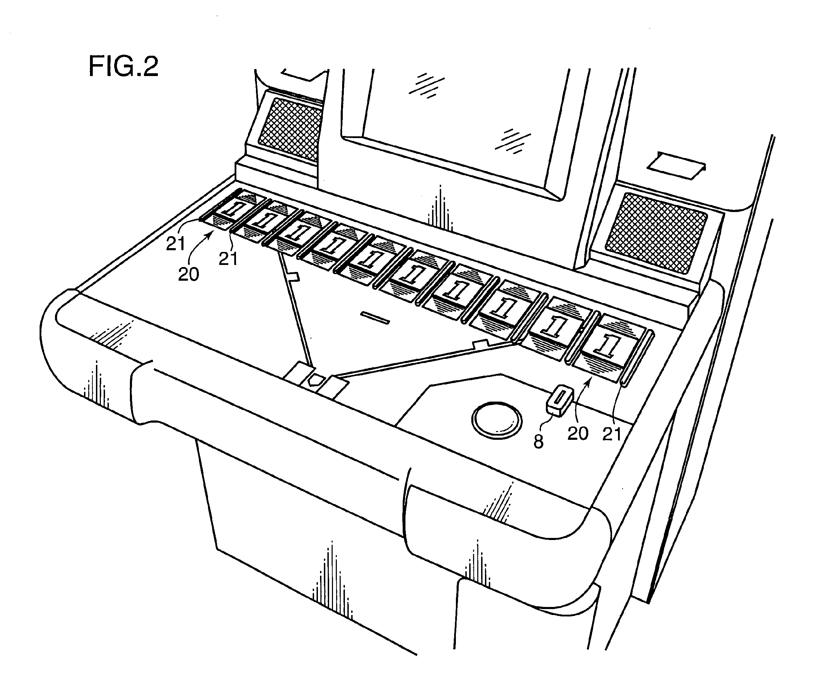

FIG. 1 is a schematic external view showing a game apparatus according to one embodiment of the present invention. The game apparatus according to this embodiment comprises a housing 1 with a predetermined three-dimensional structure, for example, having an approximately rectangular parallelepiped shape. The housing 1 is formed with a card-mounting section 2 in an approximately central region of an upper surface thereof. The card-mounting section 2 has a mounting surface 20 (see FIG 2) for allowing to a player (i.e., game player) to mount thereon an athlete card with a predetermined shape. The housing 1 is provided with a monitor 3 such as a CRT display unit or a liquid-crystal display unit, which is adapted to display a game image thereon and disposed on an upper side of the card-mounting section 2, and a pair of speakers 41, 42 adapted to output audio and produce sound effects and disposed on right and left sides of the monitor 3, respectively. The housing 1 also includes a personal-card loading slot 5 formed on an upper side of one of the right and left speakers 41, 42 (in this embodiment, on an upper side of the right speaker 41), and an athlete-card issue slot 6 formed on an upper side of the left speaker 42. Further, the housing 1 is provided with a pair of light-emitting sections 71, 72 adapted to produce illumination effects and disposed on respective upper sides of the personal-card loading slot 5 and the athlete-card issue slot 6. The card-mounting section 2 is formed with a coin input slot 8 for guiding a coin input which is a condition for starting a game, at a predetermined position thereof.

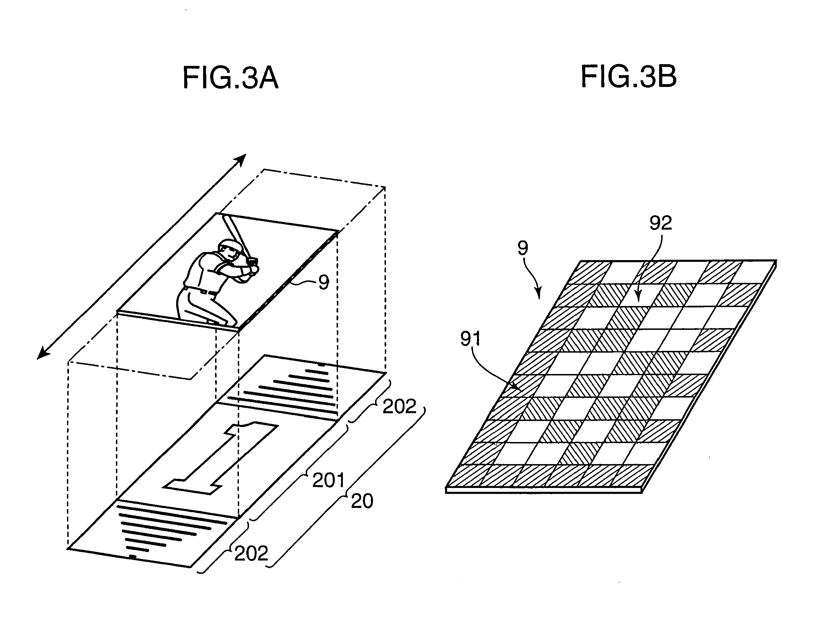

FIG. 2 is a perspective view showing one example of the configuration of the card-mounting section 2. The card-mounting section 2 has an upper surface formed in a predetermined shape (in this embodiment, a quadrilateral shape) to extend horizontally and flatly. The game apparatus according to this embodiment is designed to simulate a baseball game, and therefore a picture simulating a playing field of a baseball stadium is drawn on the card-mounting section 2. As the athlete card 9, a predetermined shaped card may be employed, and a rectangular-shaped card is employed in this embodiment, as shown in FIG. 3A. In the card-mounting section 2, the mounting surface 20 is provided in a plural number to allow a plurality (in this embodiment, ten) of the athlete cards to be mounted thereon at predetermined intervals along a rightward/leftward (i.e., lateral) direction thereof. Each of the mounting surfaces 20 is formed to have a width dimension corresponding to that of the athlete card 9. The mounting surface 20 is formed with a guide member on right and left sides thereof to serve as an assist member for guiding the athlete card 9 to facilitate a sliding movement of the athlete card 9 from a loading position in a primary direction, for example, in a frontward/rearward (i.e., longitudinal) direction. For example, the guide member consists of a pair of convex strip-shaped members 21 extending in a sliding direction (in this embodiment, the longitudinal direction) in spaced-apart relation to each other by the width dimension of the athlete card 9. Each of the convex strip-shaped members 21 has a longitudinal dimension set to be equivalent to a sliding range of the athlete card 9.

FIG. 3 illustrates the configuration of the athlete card and a relationship with the mounting surface, wherein A is a perspective view showing the configuration of the athlete card and the relationship with the mounting surface, and B is a schematic diagram showing a mark which is marked on a bottom surface of the athlete card. In FIG. 3A, the athlete card 9 is illustrated in a floated state relative to the mounting surface 20, for facilitating understanding. As shown in FIG. 3A, the mounting surface 20 has a central region 201, and front and rear sliding regions 202. The central region 201 has the same size as that of the athlete card 9, and each of the sliding regions 202 has a desired longitudinal dimension relative to the central region. For example, the dimension of the sliding region 202 may be set to be approximately one-half of a longitudinal length of the athlete card. The sliding regions 202 are provided as a means to allow the athlete card 9 to be mounted while being offset (slidingly moved) relative to the central region 201 in the range indicated by the arrow, so as to provide variations in mode of an after-mentioned action of a character to be displayed on the monitor 3 correspondingly to the athlete card 9, as will be described in detail later. The athlete card 9 has a top surface printed with an athlete character image, and a bottom surface printed with visible information about an athlete, such as a photographic image of athlete's face and athlete's name, and invisible athlete identification data.

As shown in FIG. 3B, a mark printed on the bottom surface of the athlete card 9 includes a position detection mark 91 for detecting a card-mounted position where the athlete card 9 is mounted on the mounting surface 20, and a character mark 92 representing character data (hereinafter referred to as "parameter") which is identification data of an athlete character corresponding to each of the athlete cards 9. An identification number may be used as the athlete identification data. For the sake of simplifying explanation, in this embodiment, the athlete card 9 is formed in a grid pattern of 6 columns x 10 rows, wherein peripheral ones of the grids are used as the position detection mark 91, and the remaining inward grids (4 columns x 8 rows) are used as the character mark 92. In practice, the athlete card 9 may be formed in a grid pattern having an adequate number of columns and rows capable of storing desired data.

As the position detection mark 91, a predetermined material is attached on all the grids in adjacent two of four peripheral edges thereof, and every other ones of the grids in the two remaining column-wise and row-wise peripheral edges, through a coating process or the like. That is, the position detection mark 91 consists of the continuous grid region, and the alternate grid region. This makes it possible to detect that the athlete card is erroneously mounted back to front, so as to reliably perform the position detection in a correct orientation of the athlete card.

As to the character mark 92, the athlete identification data is created by attaching the predetermined material on specific ones of the grids (each serving as one bit) on the inward side relative to the grids in the four peripheral edges, through a coating process or the like. The character data (parameters) of entire athletes are essentially pre-stored in a desired memory section of the game apparatus, in associated relation with the athlete identification data. Then, during a course of the game, one of the athlete parameters which is pre-stored in the memory section and identified by the athlete identification data obtained through a reading operation of the athlete card 9 is read from the memory section and used.

The coating material may be a visible material. In this embodiment, an invisible material, such as a material sensitive to infrared light, is use as the coating material, because infrared-light detection means is employed as will be described in detail later. As one example, the athlete card 9 is made of an infrared-light absorbing material, or the bottom surface of the athlete card 9 is coated with an infrared-light absorbing material, and then the position detection mark is marked thereon. Further, at least the mounting surface 20 of the card-mounting section 2 is made of a material transparent to infrared light. The character mark 92 indicates identification information for identifying a corresponding athlete character, and an ability (including skills) of the athlete character.

For example, in a hitter (batter) character, the ability includes, as a common item, fielder parameters, such as "trajectory of batted ball (or hitting distance)", "bat control", "swing power", "running ability", "throw distance", "defensive skill", "error-free level" and "main position". Further, the ability includes, as a specific ability item in each of the characters, fielder parameters, such as "intimidating power", "bat control correction against left-handed pitcher", "hitting power correction against left-handed pitcher", "correction in chance", "swing timing", "average hitter", "power hitter", "table-setter", "winning hitter", "coping with adversity", "hitting to opposite field", "spray-hitting style", "infield single", "bunt skill", "grand-slam hitter", "pinch hitter", "strikeout leader", "first-pitch swinger", "multi-hit", "hitting streak", "cleanup batter", "back-to-back home run hitter", "tenacious player", "glove man", "stolen base leader", "hard-charging", "base running", "home base-sliding", "throwing", "blocking", "ability to inspire other players", "run-scoring error", "leadoff home run hitter in first inning", "pitcher-leading level of catcher" and "laser-beam throw (quick throw-in)".

In a pitcher character, the ability includes, as a common item, pitcher parameters, such as "pitched-ball speed"; "slider", "curveball", "fork-ball", "sinker" and "screwball" (hereinafter referred to as "breaking-ball level"); "ball control"; "pitching velocity of fastball"; "physique"; "adjusting ability as starting pitcher"; and "reconditioning ability". Further, the ability includes, as a specific ability item in each of the characters, pitcher parameters, such as "intimidating power", "correction against left-handed batter", "toughness in pinch", "toughness against hits", "coping with base runner", "level of initial pitching", "getting a boost in last innings", "emergency pitching start", "ball release", "luckiness in games", "pickoff throw", "pitching response", "tetchiness", "rate of four wide ones", "rate of mistake pitches", "quick pitching", "coping with close game", "sense of responsibility", "pacing", "pitching stability" and "poker face". In this embodiment, the above fielder and pitcher parameters are set to all athlete characters. Further, a level of the ability or tendency (positive direction/negative direction) of each of the parameters is defined based on a desired number of stages, for example, two grades (presence and absence), three grades (high, intermediate and low) or four or more stages.

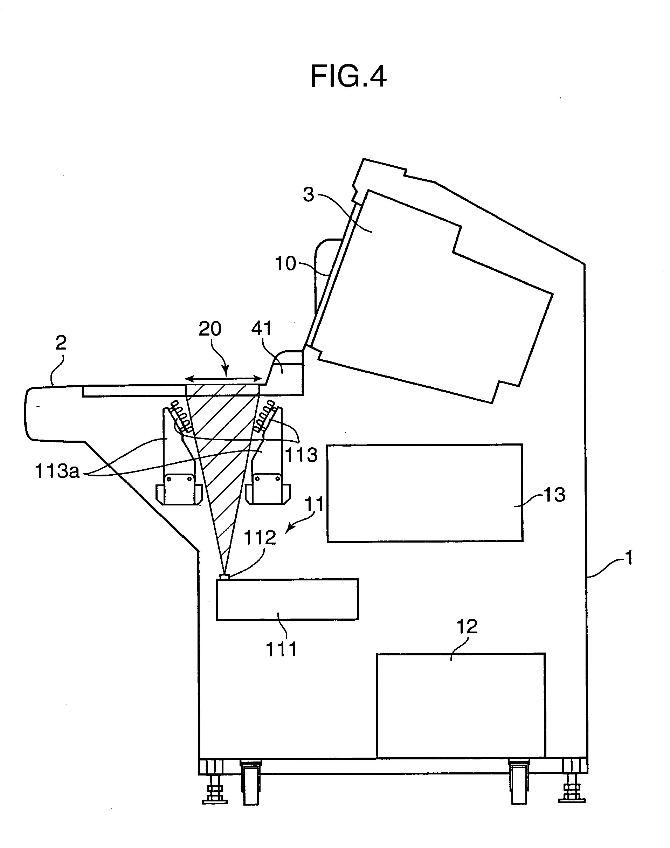

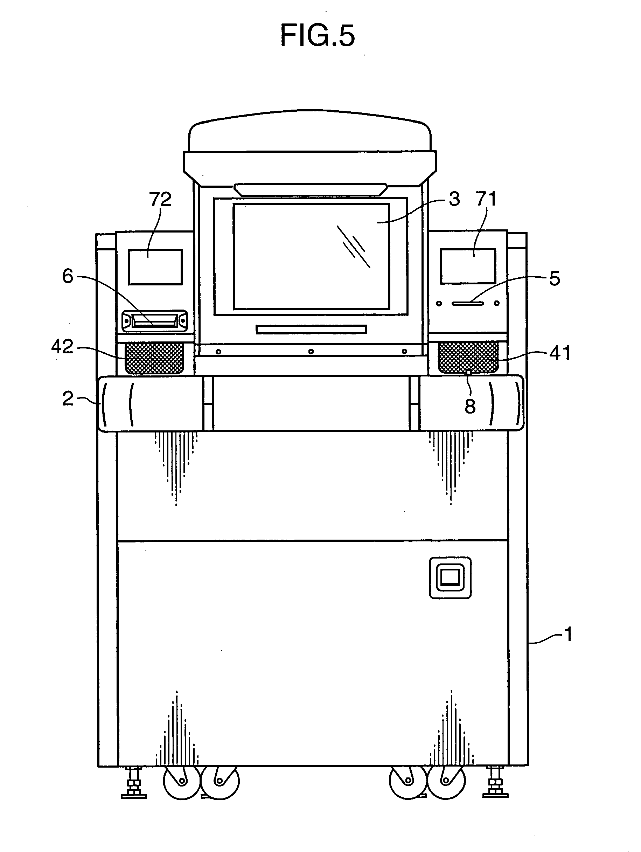

FIG. 4 is a side sectional view of the game apparatus, and FIG. 5 is a front view of the game apparatus. In FIG 4, a touch panel 10 consisting of a transparent thin-layer-shaped pressure-sensitive element is disposed on a surface of a tube (i.e., screen) of the monitor 3 in a superimposed manner. This touch panel 10 is designed such that, when it is pressed by operator's finger or the like, the pressed position is output in the form of a voltage level indicative of horizontal and vertical positions. Specifically, the touch panel 10 is formed, for example, by arranging a transparent line-shaped pressure-sensitive material on a rectangular-shaped thin-layer member at a predetermined pitch and in horizontal and vertical directions, and then covering the obtained composite member by a transparent cover. The touch panel 10 is attached onto the surface of the tube of the monitor 3. As the touch panel 10, a conventional type may be employed and designed to detect a designated one of a plurality of buttons displayed on a screen of the monitor 3 to prompt selection or the like, based on an address and a pressed position of the designated button.

An image pickup section 11 is disposed inside the housing 1 and below the mounting surface 20. The image pickup section 11 serves as a means to detect a card-mounted position of the athlete card 9 mounted on each of the mounting surfaces 20 and read the information written on the bottom surface of the mounted athlete card 9. The image pickup section 11 comprises a casing which receives therein an image pickup processing section 111 adapted to control an image pickup operation and perform a processing of a picked-up image, an image sensor 112 serving as an image pickup means (a digital image-pickup device, such as a CCD camera) attached onto an upper portion of the casing, and a light source 113 adapted to generate infrared light. The image sensor 112 has a field angle which is set to provide a field of view covering all the mounting surfaces 20 so as to pick up images of the marks 91, 92 written on the bottom surface of each of the athlete cards 9 mounted on respective ones of the mounting surfaces 20. Although not seen in FIG. 4, in this embodiment, a predetermined plural number (e.g., two) of the image sensors 112 are disposed parallel to each other in the lateral direction (in FIG 4, a depth direction of the drawing sheet), wherein one of the two image sensors 112 is set to have a field of view for covering the right-half five mounting surfaces 20, and the other image sensor 112 is set to have a field of view for covering the left-half five mounting surfaces 20.

The light source 113 is supported by a light-source support member 113a in its support region extending obliquely downwardly relative to the longitudinal direction of the card-mounting section 1. The light source 113 is adapted to emit light of a predetermined wavelength range [in this embodiment, infrared light (including far-infrared light)] from the obliquely downwardly-extending region toward the loading surfaces 20, so as to irradiate the mounting surfaces 20 with the infrared light, i.e., irradiate the respective bottom surfaces of the athlete cards 9 mounted on the mounting surfaces 2 with the infrared light. With a view to uniformly irradiating all the mounting surfaces 20, a plurality of the light sources 113 are arranged over the lateral direction at desired intervals or approximately continuously. In order to achieve further uniform irradiation, the light sources 113 are disposed, respectively, on frontward and rearward sides of the mounting surfaces 20, and located out of the field angle of the image sensor 112 so as not to hinder the image pickup operation. The image sensor 112 comprises a large number of photoelectric conversion elements arranged, for example, in a matrix pattern. The image sensor 112 is adapted to periodically receive an optical image of infrared light which is emitted from the light source 113 and then reflected by the bottom surface of the athlete card 9 on each of the mounting surfaces 20 to represent the marks 91, 92, by each of the photoelectric conversion elements, and convert the received optical image to an electric signal having a level corresponding to an amount of the received infrared light. Although not illustrated, a filter is preferably disposed in front of the photoelectric conversion elements to transmit only infrared light therethrough. The image pickup processing section 111 is operable to, after performing a processing of transferring (loading) a periodically-picked-up image into an internal memory (not shown), extract the position detection mark 91 from the picked-up image developed in the memory, as a memory address, and identify a shape of the position detection mark 91 through the use of a pattern recognition technique or the like so as to calculate a card-mounted position of the athlete card 9 on the mounting surface 20. The image pickup processing section 111 is also operable to read the athlete identification data of the character mark 92, for example, in the form of bit information of the grids in the column and row directions, based on address information of a pixel which has detected the position detection mark 91 in the picked-up image.

The housing 1 is internally provided with a power supply section 12 adapted to supply a desired level of electric power to each section of the game apparatus, and a control board section 13 internally equipped with various control boards for generally executing a game processing.

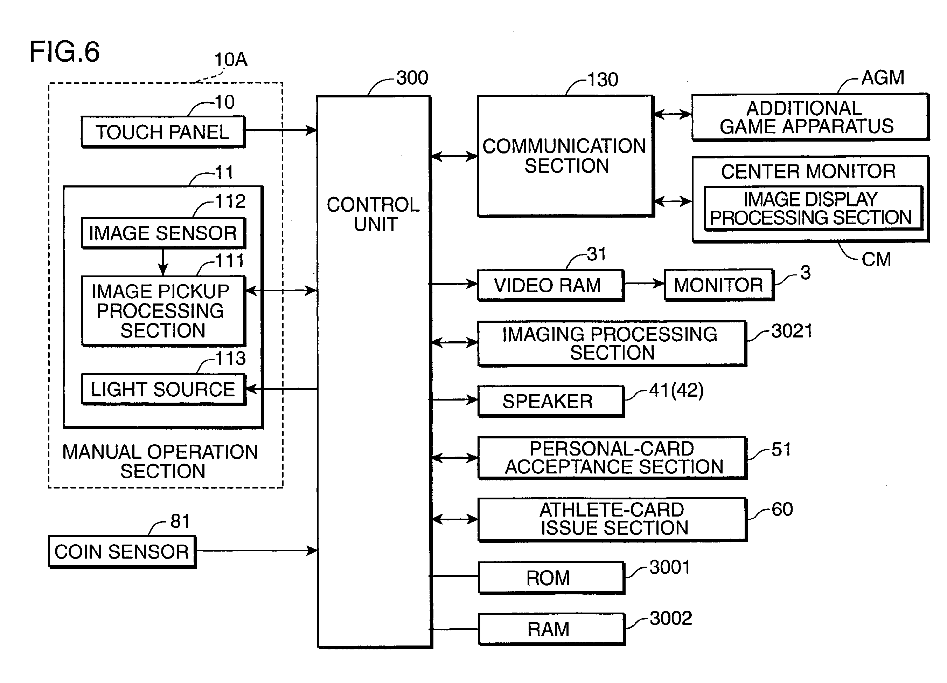

FIG. 6 is a block diagram showing a hardware comprising a control unit incorporated in the control board section, and various sections. In FIG. 6, an interface between the control unit 300 and each section, and a section adapted to generate a drive signal for driving each section, in response to receiving a control instruction, may be configured in a conventional manner, and will be omitted where appropriate.

A communication section 130 is adapted to receive and transmit data from/to an additional game apparatus AGM, and transmit data, such as game signal information, to a center monitor CM, according to need. The game apparatus according to this embodiment is intended to be placed in a hall (game hall or game arcade) in a desired plural number. The center monitor CM is internally equipped with a computer including a center-monitor image display processing section, and adapted to receive an operational signal, such as a signal representing a use state or a game state during execution of the game, from each of the game apparatuses, and selectively display information about the use and/or game states in the hall, or display, in the hall, information about the game state, such as large score difference or even score, or a game image of a particular state, such as a pinch or chance in the 9-th inning, to promote motivation to the play.

In a system where the game apparatuses are placed in a plurality halls separately, the system will be configured to allow the game to be played between the different ones of the halls through the communication section 130.

The touch panel 10 and the image pickup section 11 make up a manual operation section 10A. A coin sensor 81 is disposed inside the coin input slot 8 provided as the game start condition, to check whether the input coin is true or false, and count a required number of input coins. The input coins will be stored in a cashbox (not shown) disposed inside the housing. A personal-card acceptance section 51 is disposed inside the personal-card loading slot 5, and adapted to read information about whether a player is a membership, and/or a game record, from a loaded personal card, so as to use the read information as management information, and, every time the game is terminated, update the record and return the personal card from the personal-card loading slot 5. An athlete-card issue section 60 is internally provided with a card container (not shown) where a large number of athlete cards 9 are contained in a stacked state, and adapted to carry a predetermined number (in this embodiment, one) of athlete cards 9 from the card container to the athlete-card issue slot 6 and offer (give away) the athlete card 9 to the player. This is intended to create a scheme where a player collects the athlete cards, and arouse the player to play the game. The number of athlete cards to be issued may be changed depending on a game result.

A ROM 3001 stores a game program for operating the game, entire image data to be displayed on the monitor 3, and an imaging processing program for creating a three-dimensional image in a game space. The ROM 3001 also stores various parameters necessary for determining a game progress and a game result, and various data to be used as factors for judgment, in the form of a table. Particularly, in connection with the assumption that considering that the game apparatus according to this embodiment is designed to simulate a baseball, a control program for executing a defensive-side processing and an offensive-side processing in conformity to actual baseball rules is created and stored in the ROM 3001, and the fielder parameters and pitcher parameters for each of all athletes who will appear in the game as the characters are stored in the ROM 3001, in associated relation with the athlete identification data.

A RAM 3002 is provided as a means to temporarily store data during a course of a processing, and adapted to store various data read from the ROM 3001, and various parameters, such as abilities of each of the athlete cards 9 picked up by the image pickup section 11, during the game, and allow the data and parameters to be read therefrom and reflected on the game, according to need.

A video RAM 31 is designed to have a memory capacity corresponding to at least that of display pixels of the monitor 3, and used for forming a display image. An imaging processing section 3021 is a hardware circuit section operable, in response to receiving an imaging command from the control unit 300, to develop a display image to the video RAM 31.

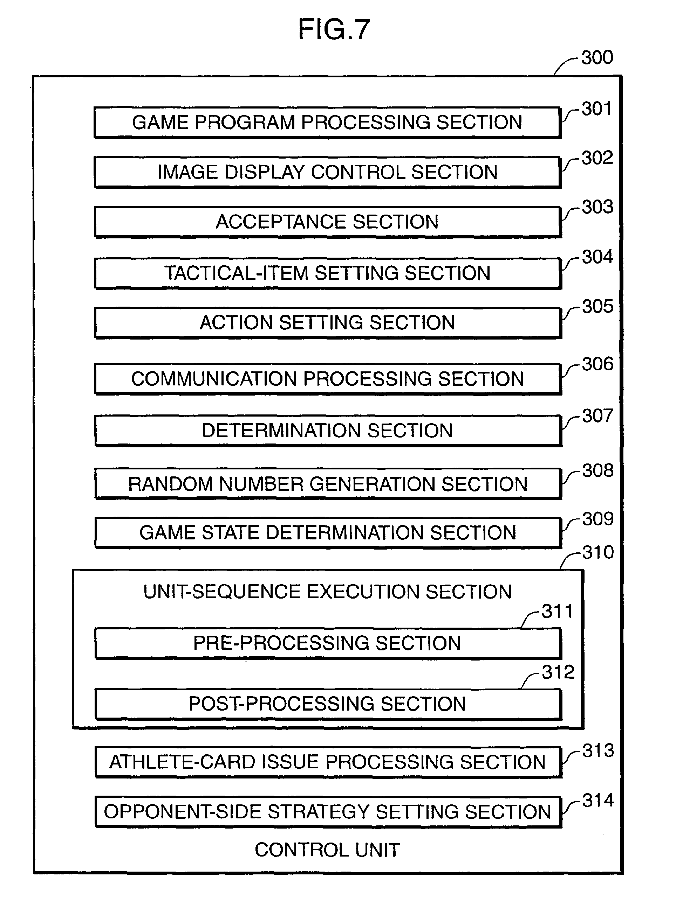

FIG. 7 is a block diagram for explaining a function of the control unit. The control unit 300 comprises: a game program processing section (i.e., game progress control section) 301 operable to generally control a progress of the game, based on the game program and an input operation relative to the manual operation section 10A; an image display control section 302 operable to controllably display a game image onto the monitor 3; an acceptance section 303 operable to accept input operation information from the manual operation section 10A; a tactical-item setting section 304 operable to set a tactical item (item of competitive tactics), i.e., a type of tactical item and/or a number of tactical items, to be displayed on the monitor 3, and calculate a success probability of each of the tactical items; an action-setting section 305 operable to create pitching data or batting data, based on a content accepted by the acceptance section 303; a communication processing section 306 operable to allow an exchange about the pitching data or the batting data between the game apparatus and the additional game apparatus AGM, and a communication about data necessary for the center monitor CM, through the communication section 130; a determination section 307 operable to determine a result of a match, based on data received from the action-setting section 305 and the additional game apparatus AGM; a random number generation section 308 operable to generate a pseudo-random number for use in a probability processing; a game state determination section 309 operable to judge a game state having an impact on a result of a match in the game; a unit-sequence execution section 310 operable to controllably execute a series of sequences individually, based on a content of the determination by the determination section 307, a content of the input operation from the manual operation section 10A, and the pitcher parameters when the player's character is a pitcher or the fielder parameters when the player's character is a fielder, or without the input operation; an athlete-card issue processing section 313 operable to issue an athlete card 9; and an opponent-side strategy setting section 314 operable to substitutionally execute an opponent-side processing for the purpose of a so-called CPU match where a player plays the game against an internal computer of the game apparatus.

The image display control section 302 is adapted to display a desired image in conjunction with the game progress, and provided with the video RAM 31.

In this embodiment, the baseball game is configured on the assumption that an action for one at-bat (this action will hereinafter be referred to as "one sequence"), where a player's character given with an action-related instruction from a player, i.e., a game player operating the game apparatus, has a match against an opponent player given with an instruction from an opponent player (additional game apparatus or internal CPU player), in a relation of a pitcher and a batter, is executed total 27 times (sequentially or serially), i.e., 3 outs/inning x 9 innings, in conformity to the baseball rule, and the two players compete on a final score, i.e., a game result. More specifically, in this embodiment, the game is configured to make progress every execution of a match consisting of one pitch to one batter, on the game.

With a view to three-dimensional imaging, each of the player's character, the opponent character, and optionally other athlete characters and a background image simulating a baseball field, is formed of a desired number of polygons. The imaging processing section 3021 (see FIG. 6) is operable, based on an imaging instruction from the image display control section 302, to perform a calculation for conversion from a position on a three-dimensional space to a position on a pseudo three-dimensional space, a light-source calculation processing and others, and then perform a processing of writing data of a target image in the video RAM 31, e.g., a processing of writing (pasting) texture data to an area of the video RAM 31 designated by the paragons.

A relationship between respective operations of the image display control section 302 and the imaging processing section 3021 will be described below. Based on an operating system recorded on the ROM 3001, the image display control section 302 reads image data, control program data and game program data from the ROM 3001. A part or entirety of the read image data, control program data and game program data are stored in the RAM 3002. Subsequently, the image display control section 302 performs an image display processing, based on an image processing subroutine in the control program stored in the RAM 3002, various data (polygons and texture of a display object, other image data including text image, and audio data), a detection signal from a detection section and others. Specifically, according to the game progress, the image display control section 302 appropriately creates a command for a task of imaging or audio output. Based on the command, the image processing section 3021 performs a calculation of a viewpoint position, a calculation of a character position on the three-dimensional space (or on a two-dimensional space, as is obvious) with respect to the calculated viewpoint position, a light source calculation, an audio-data creation/modulation processing and others. Then, based on the above calculation results, the image processing section 3021 performs a processing of writing data of a target image in the video RAM 31. The image data written in the video RAM 31 is sent to the monitor 3 (after being sent to a D/A converter through an interface and converted to an analog image signal), and displayed as an image on the surface of the tube. In the same manner, the audio data and sound effect data are output from the ROM 3001 through the RAM 3002, and output as audio from the speakers 41, 42 (through an amplifier after being sent to a D/A converter through an interface and converted to an analog audio signal).

The imaging command includes an imaging command for imaging a three-dimensional image using the polygons, and another imaging command for imaging a usual two-dimensional image. Each of the polygons is a two-dimensional image having a polygonal shape (in this embodiment, a triangular shape or a quadrangular shape). The imaging command for imaging a three-dimensional image using the polygons comprises polygon-apex address data read from the ROM 3001, data of a texture address indicative of a storage position of texture data to be pasted onto the polygon, data of a color-pallet address indicative of a storage position of color pallet data representing a color of the texture data, and luminance data indicative of a luminance of the texture. One character (or object) is made up of a large number of the polygons. The image display control section 302 is operable to store, on the RAM 3002, coordinate data of each of the polygons on three-dimensional space. Then, in an operation of moving the characters and others on the screen of the monitor 3, the following processing is performed.

Based on three-dimensional data about the apexes of the respective polygons which is temporarily stored in the RAM 3002, translation-distance data of the respective polygons and rotation-angle data of the respective polygons, the image display control section 302 sequentially calculates three-dimensional coordinate data of the respective polygons after translation and rotation. Among the calculated three-dimensional coordinate data of the respective polygons, horizontal and vertical coordinate data are sent as address data on a display area of the RAM 3002, i.e., polygon-apex address data, to the imaging processing section 3021. The imaging processing section 3021 writes texture data designed by pre-assigned texture address data, on a triangular-shaped or quadrangular-shaped display area designated by address data of three or four polygon apexes. In this manner, a character (or object) formed of a number of polygons with texture data pasted thereon is displayed on the display surface of the monitor 3.

The acceptance section 303 is adapted to accept information about pressing by a player, from the manual operation section 10A (specifically, from the touch panel 10), and accept information about mounted position of an athlete card operated by the player, and information about the pitcher parameters or fielder parameters representing abilities of an athlete character in the ROM 3001 which corresponds to athlete identification data on a bottom surface of the athlete card 9, from the image pickup section 11.

As the tactical item, the ROM 3001 stores, for a pitcher-side player, "Attack by fastballs openly", "Throw inside or outside", "Fend off by breaking balls" and "Change pitch (i.e., pitched ball) speed ", and stores, for a batter-side player, "Hit fastballs", "Find out pitch location (inside and outside pitches)", "Aim at breaking balls" and "Adjust to changes in ball speed", as tactics against the pitcher-side player. The tactical item is not limited to the above items, but any desired number of tactical items may be prepared. Each of the pairs of "Attack by fastballs openly" for the pitcher-side player and "Hit fastballs" for batter-side player; "Throw inside or outside" for the pitcher-side player and "Find out pitch location" for batter-side player; "Fend off by breaking balls" and "Aim at breaking balls" for the batter-side player; and "Change ball speed" for the pitcher-side player and "Adjust to changes in ball speed" for the batter-side player, are coincident tactical items (coincidence in strategy). Each of the tactical items is stored in associated relation with a success probability. For example, the "Attack by fastballs openly" and "Throw inside or outside" are associated with success probabilities of 90% and 80%, respectively. As to the pitch trajectories, a strike zone above a virtual home base in the game space is divided into a plurality of regions, for example, in a matrix pattern, and the pitch trajectories are set correspondingly to the respective regions or grids. As to pitched-ball speed, a predetermined value corresponding to an after-mentioned pitcher parameter and a value for a change in ball speed are set. In the same manner, as to batting, a predetermined swing speed and a predetermined swing position are set correspondingly to an after-mentioned fielder parameter.

As a directive item, the ROM 3001 further stores the following five items for a player during each defensive half-inning (hereinafter referred to as "fielding side"): "Lookout for stolen base", "Lookout for hit and run", "Defense for bunt", "Defense for double play" and "Defense for extra-base hit", and the following seven items for a player during each offensive half-inning (hereinafter referred to as "batting side"): "Bunt", "Sacrifice bunt", "Hit and run", "Stolen base (Double steal)", "Stolen second base", "Stolen third base" and "Squeeze play". It is understood that any other suitable defensive item may be employed in place of or in addition to the above items.

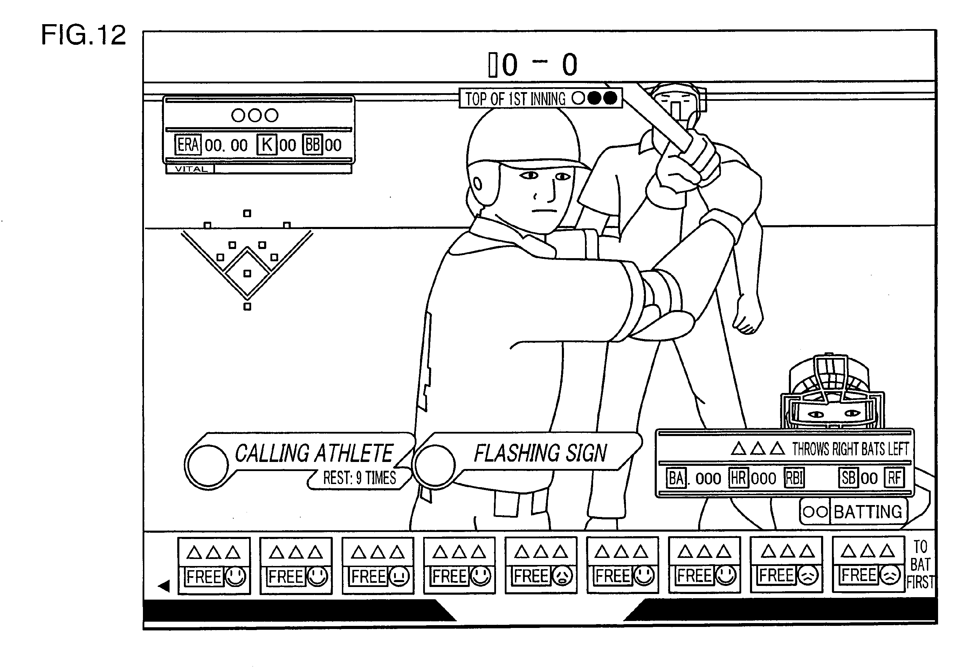

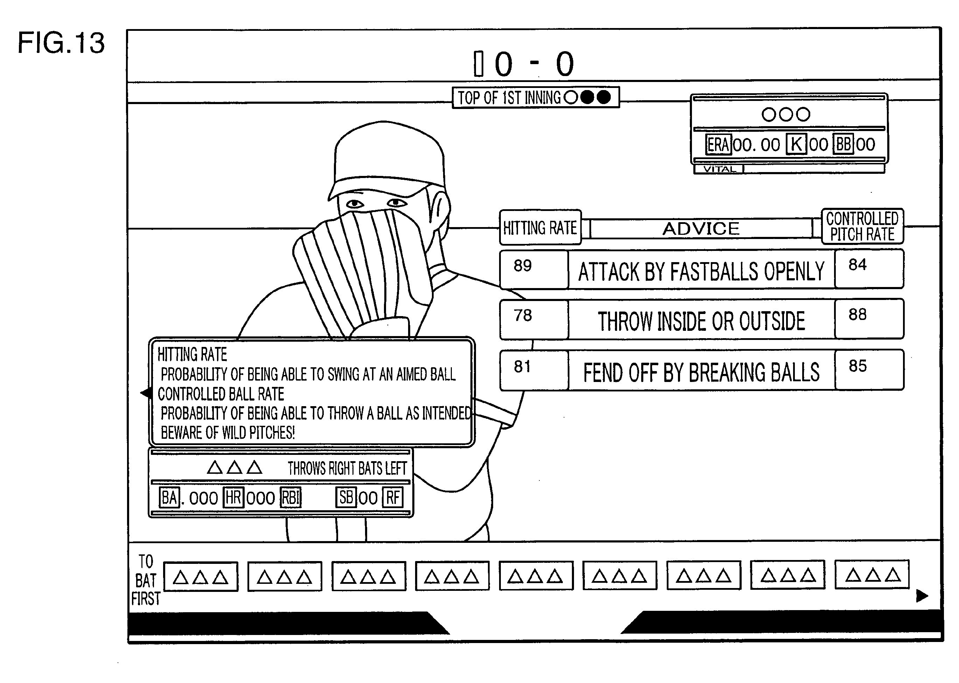

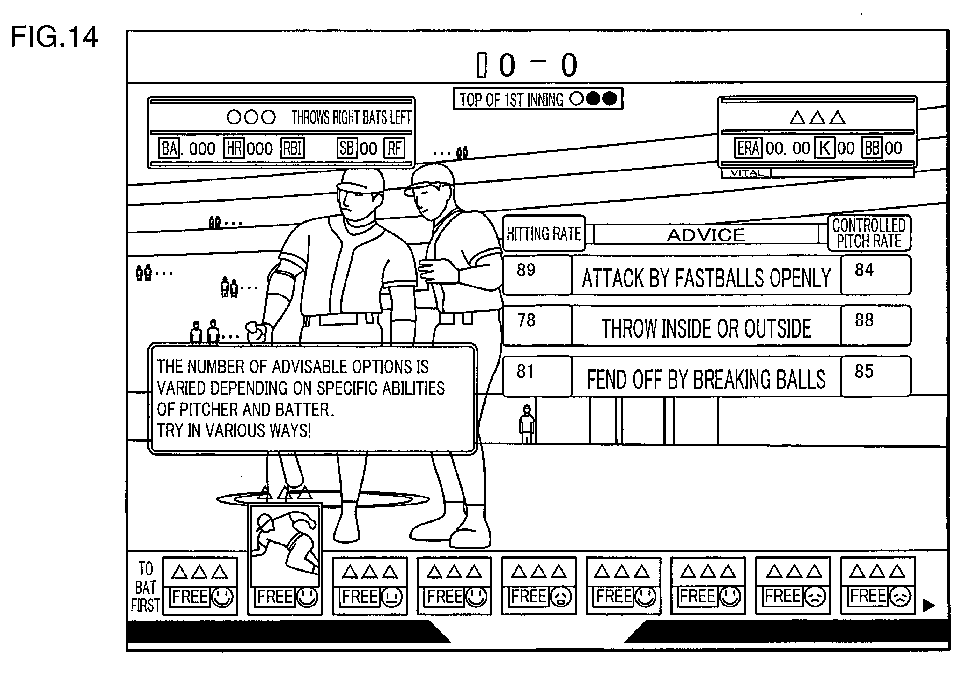

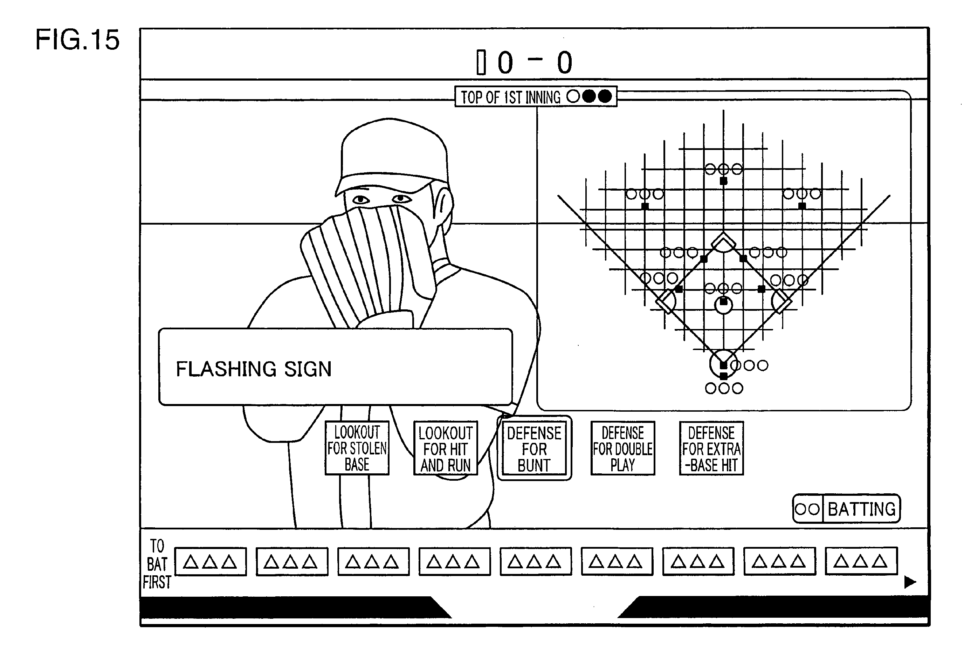

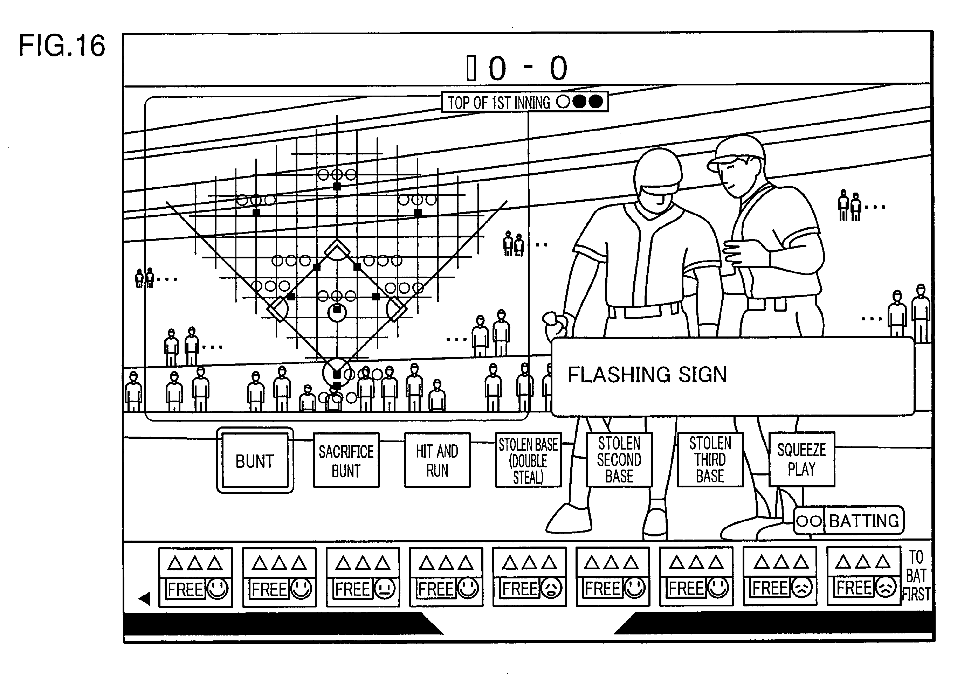

The image display control section 302 is operable, in response to pressing of a button "Calling athlete" on a screen illustrated in FIG. 12, to switchingly display a strategy designation screen illustrated in FIG. 13 when the player's character is a pitcher character, or switchingly display a strategy designation screen illustrated in FIG 14 when the player's character is a batter character. In FIG. 13, three buttons "Attack by fastballs openly", "Throw inside or outside" and "Fend off by breaking balls" are displayed as the tactical items. In FIG 14, three buttons "Hit fastballs", "Find out pitch location" and "Aim at breaking balls" are displayed as the tactical items. In the above process, on a condition that any of the tactical items in FIG. 13 is selected by a player, a signal indicative of the selection is transmitted, and then an instruction for displaying the tactical items in FIG. 14 is issued in response to the signal. A relationship between two image screens illustrated in FIGS. 15 and 16 is set in the same manner.

As shown in FIGS. 13 and 14, a success probability is displayed in association with each of the tactical items. More specifically, in FIG. 13 which shows the image screen to be displayed when the player's character is a pitcher character, a success probability corresponding to each of the pitcher-side tactical items is displayed on a right side of each of the pitcher-side tactical items, and a success probability corresponding to each of the batter-side tactical items coincident with the pitcher-side tactical items is displayed on a left side of each of the pitcher-side tactical items. For example, as to the tactical item "Attack by fastballs openly", "84%" is displayed as a value of controlled pitch rate which is set as the pitcher-side success probability, and "89%" is displayed as a value of hitting (i.e., square contact) rate which is set as the batter-side success probability. In FIG. 14 which shows the image screen to be displayed when the player's character is a batter character, a success probability corresponding to the batter-side tactical items is displayed on a left side of each of the batter-side tactical items, and a success probability corresponding to the pitcher-side tactical items coincident with the batter-side tactical items is displayed on a right side of each of the batter-side tactical items. Thus, considering the respective probabilities, the player can develop a strategy, i.e., can select one of the tactical items.

The image display control section 302 is also operable, in response to pressing of a button "Flashing sign" on a screen illustrated in FIG. 12, to switchingly display a directive designation screen illustrated in FIG. 15 when the player's character is the fielding side, or switchingly display a directive designation screen illustrated in FIG. 16 when the player's character is the batting side. In FIG. 15, five buttons "Lookout for stolen base", "Lookout for hit and run", "Defense for bunt", "Defense for double play" and "Defense for extra-base hit" are displayed as the fielding-side directive items. In FIG. 16, seven buttons "Bunt", "Sacrifice bunt", "Hit and run", "Stolen base (Double steal)", "Stolen second base", "Stolen third base" and "Squeeze play" are displayed as the batting-side directive items. In this embodiment, the game progress control section 301 is configured to accept only either one of the tactical item and the directive item, while it may be configured to allow a player to select both ones of the tactical items and the directive items.

The tactical-item setting section 304 is configured to be activated when the button "Calling athlete" is pressed, and operable to set the tactical items which as selectable by a player through the touch panel 10 on the monitor 3. Specifically, a type of tactical item and the number of tactical items to be displayed on the monitor 3 are set based on a specific one or more of the pitcher parameters and the fielder parameters corresponding to respective ones of a pitcher character and a batter character, as follows. For example, a plurality of items, such as "Hit fastballs", "Find out pitch location" and "Aim at breaking balls", are prepared in advance, and selected based on a calculation result obtained from contents of respective pitcher and batter parameters of a pitcher and batter who have a match, in accordance with a predetermined rule.

The tactical-item setting section 304 is operable, when the batter has a relatively high ability and the pitcher has a relatively low ability, in terms of a level of the parameters, to reduce the number of tactical items so as to work out in batter' favor. Conversely, when the batter has a relatively low ability and the pitcher has a relatively high ability, the tactical-item setting section 304 is operable to increase the number of tactical items so as to work out in pitcher' favor. For example, the following pitcher (specific ability) parameters for a pitcher: "correction against left-handed batter", "toughness in pinch", "coping with base runner", "emergency pitching start", "level of initial pitching", "getting a boost in last innings", "coping with close game" and "sense of responsibility", and the following fielder (specific ability) parameters for a batter: "bat control correction against left-handed pitcher", "correction in chance", "winning hitter", "coping with adversity", "grand-slam hitter", "pinch hitter", "strikeout leader", "multi-hit", "hitting streak", "cleanup batter", "leadoff home run hitter in first inning", "back-to-back home run hitter" and "table-setter", are used as a factor for determining a type of tactical item and the number of tactical items. It is understood that any other suitable parameter may be employed in place of or in addition to the above factors (parameters).

The action-setting section 305 is provided as a means to create information necessary for determining a strategy result, i.e., data to be transmitted to the opponent's game apparatus, based on a part of input operation information from the manual operation section 10A, and the athletic parameters. As shown in FIG. 12, the image display control section 302 is operable to display a guide image for prompting a player to select a strategy, (in this embodiment, the plurality of buttons including the texts "Calling athlete" and "Flashing sign") in a game image. The action-setting section 305 is operable, when one of the buttons is pressed by a player, to switch this image screen to the image screen for inputting the tactical items for the strategy, through the touch panel 10.

In this embodiment, in order to virtually set in what mode an action of each of the athletic characters is performed, card-mounted position information from the image pickup section 11, in information input from the manual operation section 10A, is reflected on an operation of setting an attribute defining the action mode in a plurality of preset levels, at one of the levels.

The level of the attribute represents a level (pitching power) of a pitcher when he throws a ball at full power or while saving its power, or a level (swing power) of a batter when he swings a bat. Specifically, as to the attribute level for a pitcher, when an athlete card 9 is mounted on a front side relative to the central position of the mounting surface, the pitching power will be set closer to the full power to increase a pitched-ball speed and lower a hits-allowed rate while increasing a stamina consumption. When the athlete card 9 is mounted on a rear side relative to the central position of the mounting surface, the pitching power will be saved (the pitched-ball speed is lowered) to increase the hits-allowed rate while reducing the stamina consumption. The parameter of stamina consumption is pre-managed, and configured to be increased in a virtual situation when the pitcher is on the batting side and in a dugout or bench. Further, the parameter of stamina consumption for a pitcher is configured to be reduced depending on the level of pitching power by a predetermined value.

As to the attribute level for a batter, when an athlete card 9 is mounted on a front side relative to the central position of the mounting surface, the swing power will be increased to more hardly swing a bat, and lower a hitting rate. When the athlete card 9 is mounted on a rear side relative to the central position of the mounting surface, the swing power will be more saved to suppress a hard swing and increase a value of the hitting rate. The increase/decrease in swing power of a batter is reflected on respective level of distance and speed of a batted ball, i.e., a height in trajectory (i.e., a value of ascending vertical angle) of the batted ball, and a hit rate.

The action-setting section 305 is also operable to perform a directive determination processing in the image screen in FIG. 15 switched in response to selection of the button "Flashing sign" in FIG. 12 by a player on the fielding side, and in the image screen in FIG. 16 switched in response to selection of the button "Flashing sign" in FIG. 12 by a player on the batting side. Specifically, when a player on the fielding side selects any one of the buttons illustrated in FIG. 15, or a player on the batting side selects any one of the buttons illustrated in FIG. 16, the action-setting section 305 is operable to accept a content of the selection from the acceptance section 303 and fix the content of the selection as a directive selection result. Then, the unit-sequence execution section 310 is operable to reflect the directive selection result on a processing of changing a defensive position of a fielder and a processing of controlling base-running of a base runner, in such a manner as to simulate an actual baseball (i.e., according to a control program based on the baseball rule).

In this embodiment, the action-setting section 305 is adapted to create the following transmitting data: "ball release timing", "pitch type", "selected tactical item", "selected directive item", "pitch location" and "attribute level (full power to saved power)" for pitcher data; and "swing timing", "selected tactical item", "selected directive item", "batted-ball direction" and "attribute level (hard swing to controlled swing) for batter data. In the pitcher data, the "ball release timing", i.e., a time lag relative to the "ball release" (optimum ball release timing) in the pitcher parameters, is set based on the random number generation section 308 or a random processing. The "pitch type" is set from various breaking balls in the pitcher parameters, in consideration of the directive information and the attribute level. The "pitch location" is set based on both the pitcher and batter parameters. In the batter data, the "swing timing", i.e., a time lag relative to the "swing timing" (optimum swing timing) in the fielder parameters, is set based on the random number generation section 308 or a random processing.

The communication processing section 306 is provided as a means to allow given information including the strategy information created by the action-setting section 305 based on the content of the selection from the manual operation section 10A, to be bidirectionally transmitted from one of the game apparatuses to the other game apparatus. Thus, the two game apparatuses can receive data from the other side to have the same information therebetween.

Based on one selected from the tactical items in FIG. 13 or 14 by a player, a success probability of the selected tactical item, card-mounted position information of each athlete card 9 on the mounting surfaces 20 and parameter information of the athlete card in the ROM 3001, obtained from the image pickup section 11 (through the acceptance section 303), and data received from the opponent's game apparatus through the communication section 306, the determination section 307 is operable to determine a match result while taking account of an attribute level as a mode of the selected tactical item. The determination section 307 is also operable to subject a success probability of the tactical item selected by each of the pitcher-side and batter-side players, to a probability processing based on a pseudo-random number generated by the random number generation section 308 as will be described in detail later, so as to determined whether a result of the match is hit or out (struck out swinging, i.e., whiff). Specifically, if respective tactical items selected by the pitcher-side and batter-side players are coincident with each other, the determination on hit/out is performed using data of one of the sides which will enjoy an advantage from the coincidence in strategy, i.e., the batter-side. If the selected tactical items ate not coincident with each other, the determination on hit/out is performed using data of one of the sides which will enjoy an advantage from the non-coincidence in strategy, i.e., the pitcher-side. In this process, the stamina consumption is also reflected of the determination. Alternatively, the game apparatus may be configured such that, when a judgment section (not shown) determines that a stamina consumption of an athlete becomes equal to or less than a predetermined threshold, an instruction for change of the athlete is issued.

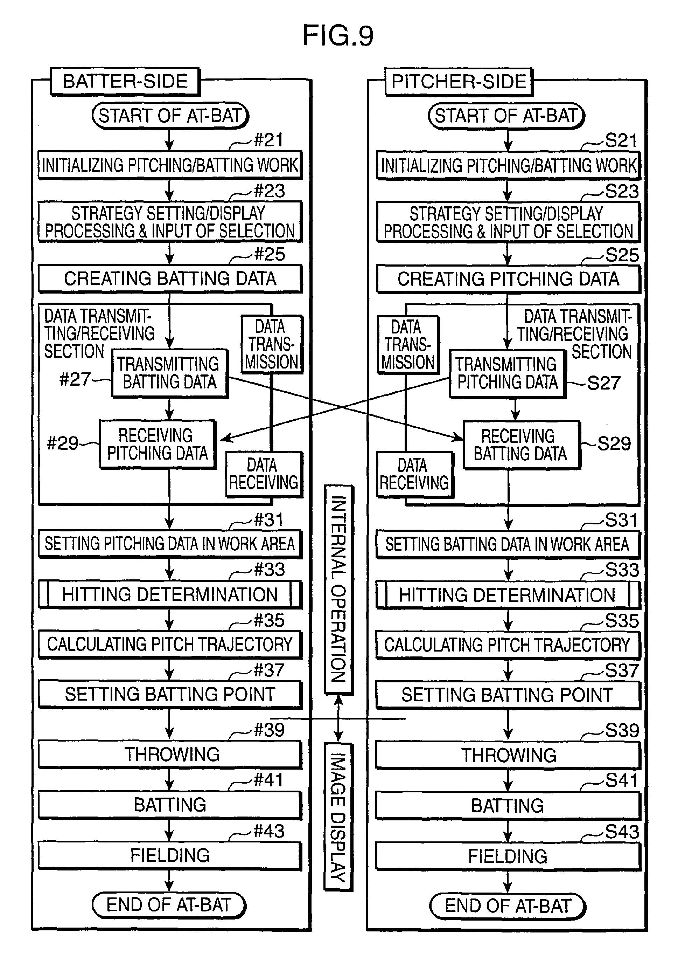

The determination section 307 is also operable, when neither the tactics item nor the directive item is selected, to perform the hit/out determination through an after-mentioned hitting processing (FIG. 9) based on pitcher data or batter data transmitted to the other game apparatus without any selected tactics item or directive item.

The random number generation section 308 is operable to generate a pseudo-random number in accordance with a predetermined rule so as to allow the success probability of the tactical item is subjected to the probability processing using the generated pseudo-random number, as described above. For example, when a batter has an advantage as a result of coincidence between the batter-side and pitcher-side tactical items, and the success probability of the coincident tactical items is 90%, a counter countable from 1 to 100 is activated, and the match result is determined as success (hit) if a value of the counter when it is stopped at a time determined in accordance with a predetermined rule is in the range of 1 to 90. Further, if the value of the stopped counter is in the range of 91 to 100, the match result is determined as failure (whiff). That is, the success probability of greater than 50%, e.g., 90%, does not directly lead to success. This can add a sense of expectancy and unpredictability to provide enhanced entertainment/amusement of game. The game program processing section 301 is operable to initialize the random number generation section 308, before start of a next game, or at start of a game, or at initiation of each sequence. In a match of the game between the two game apparatuses, the game apparatuses exchange their data therebetween through the communication processing section 306 to perform the probability processing under the same condition, i.e., using the same data, so that each the random number generation section 308 in the two game apparatuses can constantly generate pseudo-random numbers coincidentally to thereby provide a coincident match result therebetween. Further, when the unit-sequence execution section 310 performs a probability processing using a pseudo-random number as will be described in detail later, a content of the processing can also be constantly coincident between the two game apparatuses without exchanging processing data through the communication processing section 310. This makes it possible to display the same game image on the respective monitors 3 of the two game apparatuses, along with progress of the game.

The game state determination section 309 is provided as a means to determine a game state (score, pinch, chance, etc.) based on the number of executed sequences, i.e., the number of innings or the number of outs in a baseball game, and an adjacent sequence execution result. When a result of the determination is a predetermined special state (e.g., final inning) or a notable state (bases loaded), this state will be reflected on a match result to be determined by the determination section 307, i.e., a processing of determining hit/out. This makes it possible to provide higher excitement to the game.

The image display control section 302 in this embodiment is adapted to image the same event from different viewpoint positions desirable for respective ones of pitcher and batter sides so as to provide enhanced visibility of game progress to each of pitcher-side and batter-side players, while it may be configured to display the same display image (i.e., display images which are same in a view point of a virtual camera and a direction of a sight line) on respective ones of pitcher-side and batter-side screen.

The unit-sequence execution section 310 is adapted to sequentially calculate respective movements of a pitcher character, a fielder character, a batter character and a base runner character during a series of actions in a process from pitching by a pitcher through until a result of batting, and a movement of a ball character configured to simulate a ball, and sequentially lead the sequential calculation results to the image display control section 302.

The unit-sequence execution section 310 comprises a pre-processing section 311 and a post-processing section 312. The pre-processing section 311 is operable to obtain a processing result using a content of a determination by the determination section 305 and parameters used for the determination, before the pitcher character displayed on the monitor 3 throws the ball character. Specifically, when a player is on the pitcher side, the pre-processing section 311 is operable to calculate respective data about a pitch location (inside/outside pitch), a pitched-ball speed (using the "ball speed" and "ball release" in the pitcher parameters), a pitch type, a trajectory of a pitched ball and a ball-passing position above a home base. When a player is on the batter side, the pre-processing section 311 is operable to calculate a trajectory of bat swing, whether the bat can hit the pitched-ball, and respective parameters of "batted-ball speed", "batted-ball angle" and "rate of decrease in batted-ball speed" at a moment when batted, when it is calculated that the bat can hit the pitched-ball. The respective trajectories of the pitched-ball character and the bat swing in the above calculations may be obtained in consideration of a commonly-used dynamics and air resistance, or may be obtained through a simulation-based calculation on the basis of a movement close to an actual movement and at a processing speed required for a game processing.

The post-processing section 312 is designed for a processing for an action to be performed after the pitching movement, and adapted to perform calculations for allowing a fielder character to have a natural defensive movement, relative to the movements of the ball character and the base runner character and allowing the base running character to have a natural base-running movement, relative to the movements of the ball character and the fielder character (according to a control program in conformity to the baseball rule), and perform a calculation for moving the ball character based on the data at the time when it is hit by the bat character. The post-processing section 312 is also operable to calculate a batted-ball speed and a batted-ball angle after hitting, in accordance with a misalignment and a time lag between respective ones of the passing position and timing of the ball character above the home base and the swing position and timing of the bat character, and by use of the respective parameters of the "batted-ball speed", the "batted-ball angle" and the "rate of decrease in batted-ball speed" obtained by the pre-processing section 311. In this calculation, the "batted-ball speed" and the "batted-ball angle" may be configured to provide variations in trajectory of the batted ball, using the random number generation section 308, so as to produce an enhanced realistic image.

The post-processing section 312 is operable to repeatedly perform the above calculation in a predetermined cycle and lead the obtained result to the image display control section 302 so as to dynamically display respective movements of the ball character, the pitcher character, the batter character, the fielder character and the base runner character on the monitor 3 to achieve more realistic sequence processing.

The athlete-card issue processing section 313 is operable, in response to termination of the game, to generate an instruction for issuing a predetermined number (in this embodiment, one) of athlete cards from the athlete card container in the housing 1 through the athlete card issue slot 6. Thus, a player can steadily collect a different type of athlete card every time he/she plays the game.

The ROM 3001 in the game apparatus pre-stores an athlete character image in a number enough to form one computer-controlled baseball team and respective parameters of athlete characters (pitcher parameters and fielder parameters). The opponent-side strategy setting section 314 serves as a means to achieve a CUP match against a player using a single of the game apparatus, and plays a roll of performing a processing of selecting the tactical item and the directive item, a processing of determining the attribute level and a match result, and a processing of executing each sequence. Fundamentally, this opponent-side strategy setting section 314 is operable to activate the tactical-item setting section 304, the action-setting section 305, the communication processing section 306, the determination section 307, the random number generation section 308, the game state determination section 309 and the unit-sequence execution section 310, in the game apparatus thereof, in substantially the same manner as that in a situation where an opponent player exists, and perform an processing of display an image on a single monitor.

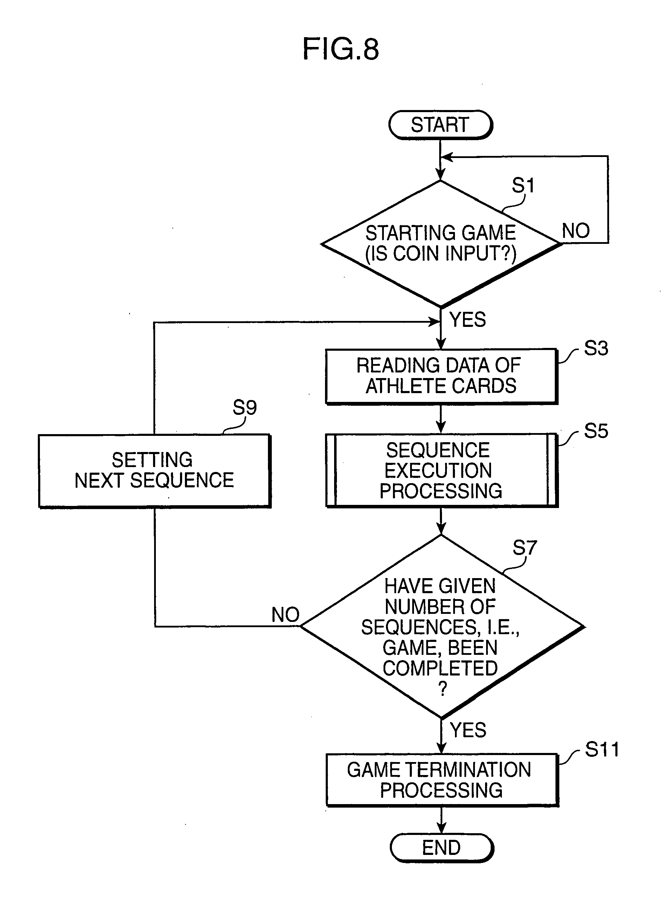

FIG. 8 is a flowchart showing a general flow of a game process. Firstly, the coin sensor 81 detects whether a coin is input (Step S1). If YES, the image pickup section 11 is activated to detect that a required number (in a baseball game, nine) of athlete cards are mounted on the mounting surfaces 20, and read athlete identification data of the respective athlete cards (Step S3). Subsequently, after the game is initiated and data exchange between a player and an opponent is performed, the routine advances to a processing of executing one sequence for a match against one batter (Step S5). Every time such a sequence is completed, it is determined whether the game is terminated (Step S7). When there is a remaining out or inning, another sequence for a match against a next batter is set, and the routine returns to Step S3. If it is determined in Step S7 that the game is terminated, a game termination processing, for example, of presenting superiority/inferiority (victory/defeat) on the monitor 3 is performed (Step S11). Then, one new card 9 is issued, and then this routine is terminated.

FIG. 9 is a flowchart showing a pitching/batting subroutine included in the sequence execution processing in Step S5 illustrated in FIG. 8. The following description is firstly described about a subroutine to be executed when the player is on the pitcher side. A subroutine to be executed when the player is on the batter side is fundamentally the same as that in FIG. 9, and therefore a description therefor will be made about only a different from the subroutine for the pitcher-side player.

Firstly, data about a pitching/batting processing (work) executed in an adjacent sequence and the random number generation section 308 are initialized (Step S21). Then, a strategy setting/displaying processing and an input of selection, i.e., a processing of setting a plurality of tactical items, and displaying the setup tactical items as buttons on the monitor 3 and an input operation of pressing one of the button, or a processing of displaying a plurality of directive items as buttons on the monitor 3 and an input operation of selecting one of the button, is performed, and a result of selection by the player is accepted (Step S23). Position data of the athlete cards 9 on the mounting surface 20 are included in the acceptance processing.

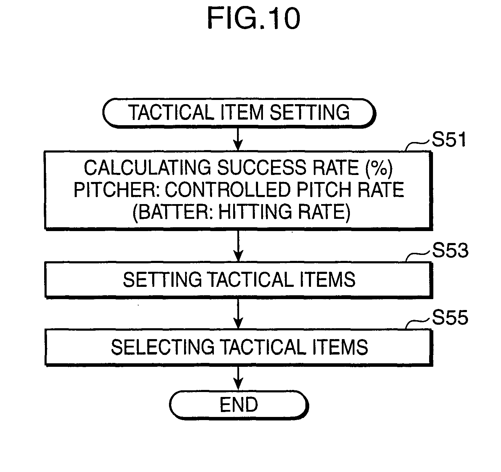

FIG. 10 is a flowchart showing a tactical-item setting subroutine included in the strategy setting/display processing. In response to selection of the "Calling athlete" in FIG 12, this subroutine is initiated to transmit information about this selection to an opponent's game apparatus and correspondingly display the tactical items. Specifically, for each of a pitcher character and a batter character, a plurality of tactical items are created, and a success probability (success rate) of each of the tactical items is calculated, based on the aforementioned predetermined pitcher parameter when the player is on the pitcher side, or the aforementioned predetermined batter parameter when the player is on the batter side (Step S51). Based on this result, the number of tactical items and types of tactical items are set according to a predetermined rule to display the set tactical items on the monitor 3 (Step S53; see FIGS. 13 and 14), and the subroutine is kept in a standby state for waiting an input by the player. Then, information about which button the player presses to select one of the plurality of tactical items is received as information about a selected tactical item (Step S55), and the subroutine is terminated. If a button in at least one of the player and opponent sides is not pressed within a waiting time, a processing of arbitrarily or randomly selecting one tactical item will be performed by the control section 300.

Returning to FIG 9, pitching data to be transmitted to the opponent's game apparatus is created (Step S25). Then, this pitching data is transmitted to the opponent's game apparatus (Step S27), and batting data transmitted from the opponent's game apparatus is received (Step S29). This transmitting/receiving operation may be performed at a time after a predetermined time has elapsed from initiation of a batting processing to allow the two game apparatuses to simultaneously transmit/receive data mutually. Alternatively, each of the game apparatuses may be configured to permit an interrupt processing for receiving data, so that data just after creation thereof can be transmitted to the other game apparatus. Through this data exchange processing, each of the game apparatuses will have the same pitching and batting data. The game apparatuses having the same data can prevent an image from being displayed with a time lag therebetween so as to provide a game environment without a feeling of strangeness in the player and opponent and advantage/disadvantage in the player due to communication.

Then, the received batting data is stored in a work area of the RAM 3002 (Step S31), and the determination section 307 performs a hitting determination processing based on the pitching data, the batting data and others (Step S33). In response to receiving information about the presence or absence of selection of a tactical mode, the hitting determination processing is performed in a separated manner between the tactical mode with selection of the tactical item, and a normal mode without selection of the tactical item (the normal mode includes a mode with selection of the directive item), as follows.

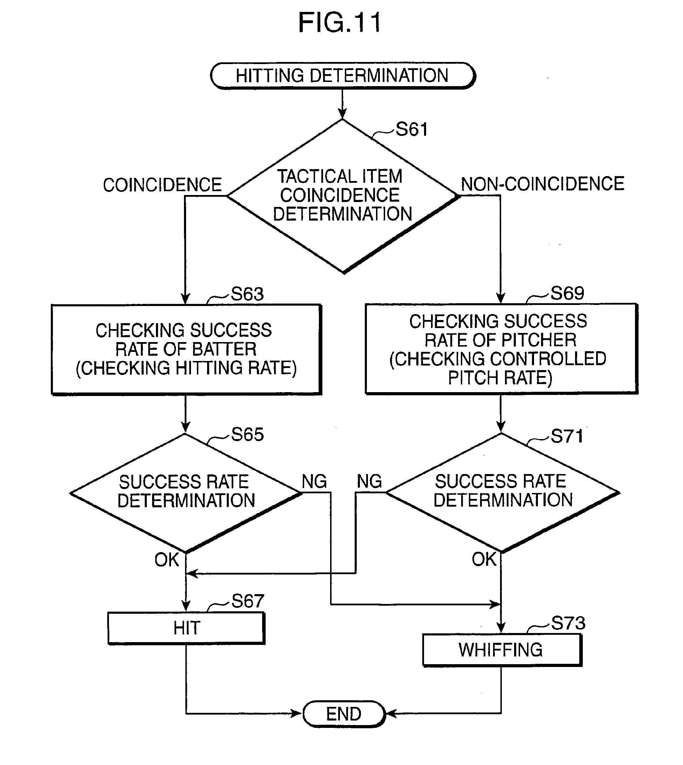

FIG. 11 is a flowchart showing the hitting determination processing. In FIG. 11, firstly, in the tactical mode, it is determined whether the selected tactical items are coincident with each other (Step S61). If the selected tactical items are coincident with each other, the subroutine advances to Step S63. If the selected tactical items are not coincident with each other, the subroutine advances to Step S69.

In Step S63, a batter's success probability (success rate, i.e., hitting rate) for selected tactical item is checked, and the success probability is subjected to a probability processing using a pseudo-random number from the random number generation section 308, to determine whether the hitting succeeds or fails, i.e., perform a success rate determination (Step S65). If it is determined that the hitting succeeds, the determination is defined as "square contact" or "hit" (Step S67). Conversely, if it is determined that the hitting fails, the determination is defined as "whiff" (Step S73). In Step S69, a pitcher's success probability (success rate) for the selected tactical item is checked, and the success probability is subjected to a probability processing using a pseudo-random number from the random number generation section 308, to determine whether the pitching succeeds or fails, i.e., perform a success rate determination (Step S71). If it is determined that the pitching succeeds, the determination is defined as "whiff" (Step S73). Conversely, if it is determined that the pitching fails, the determination is defined as "square contact" or "hit" (Step S67).

In the hitting determination for the normal mode, pitcher's and batter's success rates are calculated, respectively, from pitcher data and batter data exchanged between the game apparatuses, and the success rate in one of the player and opponent superior in success rate is subjected to a probability processing using a pseudo-random number from the random number generation section 308, to determine whether a result of hitting/pitching is hit or out.

Returning to FIG 9, in Step S35, the pitched-ball trajectory is calculated using the pitching data. Then, a "batting point" which is a ball-passing position above a home base is obtained from the calculation of the pitched-ball trajectory, and set (stored) in the work area (Step S37). Subsequently, based on the result obtained from the calculation of the pitched-ball trajectory, a pitching movement and an image of "pitched ball" as a pitching processing are displayed on the monitor 3 (Step S39). Then, based on a swing timing, a batted-ball direction and a batted-ball speed obtained by calculation as a result of batting, a batting movement and an image of "batting" as a batted-ball processing are displayed on the monitor 3 (Step S41). Then, according to the batting result, respective movements of a fielder character, a base runner and a ball character are sequentially calculated and displayed as images on the monitor 3 (Step S43).

When the player is on the batter side, the processings from Steps #21 to #43 are executed in concurrence with the processings from Steps S21 to S43. In Step #27, batting data is transmitted. In Step #29, pitching data is received.

In the present invention, the following modifications may be employed.
(1) The shape of the athlete card 9 is not limited to a rectangular shape, but may be various other shapes, such as a square shape and a circular shape, suitable for a type of game to which the present invention is applied.
(2) The athlete-card mounted position on the mounting surface may be changed in the longitudinal (i.e., frontward/rearward) direction, in the lateral (i.e., rightward/leftward) direction, or in an oblique direction, or in a combination of two or more thereof. This makes it possible to appropriately change the card-mounted position depending on the shape of the card-mounting portion and/or the type of game. Further, at least a pair of pressure-sensitive sensors may be disposed on respective ones of the front and rear side of the mounting surface 20 to change the attribute level depending on by which of the sensors the athlete card 9 is detected.
(3) While the game in the above embodiment is a simplified type where one sequence is processed with respect to each ball thrown by a pitcher, it may be configured in conformity to the baseball rule.
(4) While the game in the above embodiment is made up of a series of sequences, the game in the present invention is not limited to this configuration, but may be made up of a single sequence depending on the type of game.
(5) In the above embodiment, both the number of tactical items and a type of tactical item are variable. Alternatively, either one or both of the number and the type may be fixed.
(6) While the game apparatus according to the above embodiment employs the image pickup section 11 for detecting information on the bottom surface of the athlete card, the present invention is not limited to this structure, but various other detection means may be employed. For example, when the bottom surface information is represented by a barcode, a barcode reader may be used.
(7) While the game apparatus according to the above embodiment is designed as a type of moving the athlete card, the present invention is not limited to this type. For example, the athlete card may be fixed to another member, such as a member capable of mounting the athlete card thereto. Then, the member may be designed to be displaced (e.g., have a sliding function) relative to the mounting section 2, and the displacement may be detected.
(8) In place of the pair of convex strip-shaped members, the guide member may be provided by forming a concave portion in an upper surface of the card-mounting section 2 to extend over a mounting and sliding range so as to obtain a similar guide assist function.
(9) The marks 91, 92 may be marked using a material capable of absorbing infrared light. In this case, the athlete card 9 may be made of a material capable of reflecting infrared light (i.e., infrared-light reflecting material), or the bottom surface of the athlete card 9 may be coated with an infrared-light reflecting material, and the mounting surface 20 may be made of a material semi-transparent to infrared light. In this case, a grid coated with the infrared-light reflecting material, or a grid coated with the infrared-light reflecting material and a grid coated with no infrared-light reflecting material, may be identified.
(10) In a CUP match where one player plays a game against a built-in computer using a single game apparatus, the opponent-side strategy setting section 314 performs a control and image display as if the player plays the game against an opponent player. In this case, for example, in the hitting determination processings in Step S33 and Step #33, there is no information about card-mounted position of the athlete card 9, and the computer can fully recognize operational information of the player. Considering these situations, a determination processing unique to the CPU match is included. Thus, when the processings in Step S33 and Step #33 is initiated, the processings may be separated from each other depending on whether a match is the normal match using two game apparatuses or the CPU match, and executed in unique algorithms, respectively.
(11) The athlete card may incorporate a tag which is equipped with an antenna and an IC chip to store character data (parameters). In this case, a data reader having an antenna may be provided at a position adjacent to the mounting surface of the housing 1 to read the character data through radio waves. This makes it possible to eliminate the need for marking the mark 92 for the character data, on the bottom surface of the athlete card.
(12) While the game apparatus according to the above embodiment is used for a game played by two players, such as a baseball game, the present invention is not limited to such a manner, but may be used for a game to be played by three or more players each using the game apparatus. Further, in addition to the baseball game, the present invention may be applied to various types of games where a plurality of players are associated with each other, for example, in such a manner that a plurality of strategies competitive to each other are set by the respective players, and concurrently executed. For example, the present invention may be applied to American football and sumo wrestling. Further, the present invention may be applied to a general game, such as scissors-rock-paper. In such a game, a plot or intension of each player can be expressed by the term "strategy" or "tactics".

As mentioned above, the present invention provides a game apparatus including image display control means which is adapted to display a player's character and an opponent character on a display unit in such a manner as to allow the player's character to take an action for a match according to an instruction from the player to thereby obtain a result in accordance with a predetermined rule. The game apparatus being characterized by comprising a card-mounting section having a mounting surface for mounting thereon a card with a predetermined shape, a position detection section adapted to detect a card-mounted position where the card is mounted on the mounting surface, a storage section adapted to store an action of the player's character, and an attribute defining a mode of the action in a plurality of preset levels, in associated relation, and action-setting means adapted to set the attribute corresponding to an action of the player's character instructed by the player, at one of the levels, depending on the card-mounted position detected by the position detection section.

The present invention also provides a game execution program for use in a game apparatus which includes a card-mounting section having a mounting surface for mounting thereon a card with a predetermined shape, and a position detection section adapted to detect a card-mounted position where the card is mounted on the mounting surface. The game execution program is configured to allow a computer of the game apparatus to execute the procedure of displaying a player's character and an opponent character on a display unit, and allowing the player's character to take an action for a match according to an instruction from the player based on the mounting of the card relative to the mounting surface, to thereby obtain a result according to a predetermined rule, wherein the computer functions as: storage control means for storing, in a storage section, an action of the player's character, and an attribute defining a mode of the action of the player's character in a plurality of preset levels, in associated relation; and action-setting means for setting the attribute corresponding to an action of the player's character instructed by the player, at one of the levels, depending on the card-mounted position detected by the position detection section.

Further, the present invention provides a method for controllably executing a game by a computer of a game apparatus which includes a card-mounting section having a mounting surface for mounting thereon a card with a predetermined shape, and a position detection section adapted to detect a card-mounted position where the card is mounted on the mounting surface, in such a manner as to display a player's character and an opponent character on a display unit, and allow the player's character to take an action for a match according to an instruction from the player based on the mounting of the card relative to the mounting surface, to thereby obtain a result according to a predetermined rule. The method comprises storing, in a storage section, an action of the player's character, and an attribute defining a mode of the action of the player's character in a plurality of preset levels, in associated relation, according to an operation of storage control means, and setting the attribute corresponding to an action of the player's character instructed by the player, at one of the levels, depending on the card-mounted position detected by the position detection section, according to an operation of action-setting means.

In the present invention, respective images of the player's character and the opponent character are displayed on the display unit, and the game is played through these characters. Specifically, in response to mounting the predetermined shaped card on the mounting surface of the card-mounting section, the card-mounted position on the mounting surface is detected by the position detection section. Further, according to an instruction from the player to the player's character displayed on the display unit, based on the mounting of the card relative to the mounting surface, an action for the match will be carried out through the player's character to obtain a result in accordance with the predetermined rule. More specifically, an action of the player's character and an attribute defining a mode of the action in a plurality of preset levels are stored in the storage section in associated relation, and, depending on the card-mounted position detected by the position detection section, the attribute corresponding to an action of the player's character instructed by the player is set at one of the levels by the action-setting means. Thus, when the player's character takes an action on the display unit, the attribute defining a mode of this action is set at one of the levels, depending on where the card is mounted on the mounting surface. This makes it possible to arbitrarily change a mode of the action of the player's character so as to provide a highly-diverse game. For example, when the player's character is a pitcher or hitter character in a baseball game, depending on whether the card is mounted on the mounting surface, a pitched-ball speed of a ball character configured to simulate a ball will be variably set as a level of an attribute representing a pitching power of the player's character, or a swing speed of a bat character configured to simulate a bat will be variably set as a level of an attribute representing a swing power of the player's character.

Preferably, the opponent character is controlled by opponent processing means consisting of a computer, wherein the opponent processing means is operable to instruct the opponent character to take a competitive action for a match against the player's character and set a level of an attribute about the competitive action. According to this feature, in a single of the game apparatus, a mode of an action of the player's character is instructed based on the card mounting operation performed by a player who is a game player, and an action of the opponent character is controlled by the computer, so that the player can plays the game by his/her self.

Preferably, the game apparatus of the present invention includes a communication section adapted to provide a communication with an additional game apparatus, wherein: the opponent character is installed in the additional game apparatus; the additional game apparatus is adapted to instruct the opponent character to take a competitive action for a match against the player's character and set a level of an attribute about the competitive action; and the image display control means is operable to instruct the display unit to display an image having a same event as that in a display unit of the additional game apparatus. According to this feature, each of a level of the attribute about the action and a level of the attribute about the competitive action of the player's and opponent character to be displayed on the respective displays of the game apparatus and the additional game apparatus is instructed based on the card mounting operation performed by each of the player and the opponent, and information about the operation instruction is transmitted to the other game apparatus through the communication section, so that the two player can play the game through the respective game apparatus.

Preferably, the mounting surface is formed to allow the card to be slidingly moved therealong in at least a primary direction, and the action-setting means is operable to set the attribute about the action of the player's character at one of the levels depending on a card-slid position where the card is slidingly moved. According to this feature, when the card is slidingly moved along the mounting surface in at least the primary direction, the attribute is set at one of the levels by the action-setting means depending on the card-slid position.

Preferably, the mounting surface has a reference card-mounting position marked on an approximately central region thereof. Further, the mounting surface is formed to allow the card to be slidingly moved therealong in a reciprocating manner with respect to the primary direction, and the action-setting means is operable, when the card is mounted at the reference card-mounting position, to set the attribute about the action of the player's character at an intermediate one of the levels. According to this feature, when the card is mounted on the reference card-mounting position in the approximately central region of the mounting surface, the attribute is set at an intermediate level by the action-setting means. When the card is slidingly moved relative to the reference card-mounting position in a reciprocating manner with respect to the primary direction, e.g., in a frontward/rearward direction or in a rightward/leftward direction, the attribute is set at one of the levels by the action-setting means depending on a sliding distance. Thus, the player can variably set a mode of the action to be instructed to the player's character displayed on the display unit, depending on how much the card is slidingly moved relative to the reference card-mounting position.

Preferably, the mounting surface is provided with a guide member which protrudes therefrom to assist the sliding movement of the card in at least the primary direction. According to this feature, the player can slidingly move the card along the guide member in the primary direction in a smooth manner, and set the card in a desired position.

Preferably, the guide member consists of a pair of convex strip-shaped members extending along the primary direction in spaced-apart relation to each other by a width dimension of the card. According to this feature, the card is slidingly moved while being located between the pair of convex strip-shaped members, so that the card can be slidingly moved accurately and smoothly, and readily set in a desired position.

Preferably, the card has a position recognition mark which is marked on a specific region of a first one of opposite surfaces thereof, the position detection section includes an image sensor adapted to pick up an image of the first surface of the card mounted on the mounting surface, and an image pickup processing section adapted to determine an image pickup position of the position recognition mark, based on the image picked up by the image sensor, and detect the card-mounted position on the mounting surface, based on the determined image pickup position. According to this feature, an image of the position recognition mark marked on a specific region of a first one of opposite surfaces, for example a bottom surface, of the card, is picked up by the image sensor, and the image pickup processing section determines an image pickup position of the position recognition mark, based on the image picked up by the image sensor. Then, the card-mounted position on the mounting surface is detected from the determined image pickup position. Thus, the card-mounted position on the mounting surface can be accurately detected using the image sensor only by marking the position recognition mark on a specific region of one surface of the card.

Preferably, the position detection section includes an infrared light-emitting section adapted to emit infrared light onto the first surface of the card mounted on the mounting surface, and the position recognition mark of the card is marked using a material capable of reflecting or absorbing infrared light in a manner opposite to that in the remaining region except the specific region of the first surface. Further, the image sensor is provided with a filter adapted to allow the image sensor to be sensible to infrared light or insensible to only infrared light. According to this feature, when the card position recognition mark is marked using an infrared-light reflecting material, the image sensor receives light reflected by the card position recognition mark, and thereby the card position recognition mark is directly recognized. Conversely, when the card position recognition mark is marked using an infrared-light absorbing material, and the remaining region other than the card position recognition mark is marked using an infrared-light reflecting material, the image sensor receives light reflected by the remaining region other than the card position recognition mark, and thereby the card position recognition mark is indirectly recognized.

Preferably, the game apparatus of the present invention is designed to configure a game by a series of sequences, and obtain a game result depending on a content of the series of sequences, wherein one instruction for the action given from the action-setting means corresponds one of the sequences during the game. According to this feature, one sequence is executed every time the player instructs the player's character to take one action, and the game is terminated by sequentially executing a plurality of sequence. A game result is obtained depending on contents of execution results of the plurality of sequences. Thus, the sequence is executed plural times to obtain a game result. This provides enhanced entertainment/amusement of game.

Preferably, the card includes a plurality of cards each having different movement data, and the mounting surface is formed to allow the plurality of cards to be mounted thereon. Further, the action-setting means is operable to set a mode of the action to each of the cards in a given sequential order with respect to each of the sequences. According to this feature, in each of the sequences, a mode of the action can be sequentially set to the different cards to provide variations in the game so as to achieve further enhanced entertainment/amusement of game.

When the game is configured to simulate a baseball, and the player's character is configured to simulate a pitcher, the action-setting means is preferably operable, according to the card-mounted position detected by the position detection section, to set a pitched-ball speed of a ball character configured to simulate a ball to be thrown by the player's character, as a level of an attribute representing a pitching power of the player's character. According to this feature, when the game is applied to a baseball game, and the player's character is configured to simulate a pitcher, the action-setting means sets a pitched-ball speed of the ball character configured to simulate a ball to be thrown by the player's character, as a level of an attribute representing a pitching power of the player's character, according to the card-mounted position detected by the position detection section. This makes it possible to change a pitched-ball speed of the ball character.

Further, when the game is configured to simulate a baseball, and the player's character is configured to simulate a hitter, the action-setting means is preferably operable, according to the card-mounted position detected by the position detection section, to set a swing speed of a bat character configured to simulate a bat to be swung by the player's character, as a level of an attribute representing a swing power of the player's character. According to this feature, when the game is applied to a baseball game, and the player's character is configured to simulate a batter, the action-setting means sets a swing speed of the bat character configured to simulate a ball to be thrown by the player's character, as a level of an attribute representing a swing power of the player's character, according to the card-mounted position detected by the position detection section. This makes it possible to change a swing speed of the bat character.

In this specification, an element or component described as means for achieving a certain function is not limited to a structure or configuration described in this specification to achieve the certain function, but includes any other structure or configuration, such as a unit, component or element, capable of achieving the certain function.

### INDUSTRIAL APPLICABILITY

In the game apparatus of the present invention, when the card is mounted on a mounting surface of a card-mounting section by a player, a card-mounted position on the mounting surface is detected. A level of an attribute corresponding to an instructed action is set by action-setting means, depending on the detected card-mounted position. Thus, when a player's character takes an action on a display unit, a level of the attribute defining a mode of the action is set depending on where the card is mounted on the mounting surface. This makes it possible to arbitrarily change a mode of the action of the player's character so as to provide a highly-diverse game.

## Claims

1. A game apparatus including image display control means which is adapted to display a player's character and an opponent character on a display unit in such a manner as to allow the player's character to take an action for a match according to an instruction from the player to thereby obtain a result in accordance with a predetermined rule, said game apparatus being **characterized by** comprising:
a card-mounting section having a mounting surface for mounting thereon a card with a predetermined shape;
a position detection section adapted to detect a card-mounted position where said card is mounted on said mounting surface;
a storage section adapted to store an action of said player's character, and an attribute defining a mode of said action in a plurality of preset levels, in associated relation; and
action-setting means adapted to set said attribute corresponding to an action of said player's character instructed by said player, at one of said levels, depending on the card-mounted position detected by said position detection section.

2. The game apparatus as defined in claim 1, further comprising opponent processing means adapted to automatically issue an instruction for an action of said opponent character, said opponent processing means being operable to instruct said opponent character to take a competitive action for a match against said player's character and set a level of an attribute about said competitive action.

3. The game apparatus as defined in claim 1, further comprising a communication section adapted to provide a communication with an additional game apparatus, wherein:
said opponent character is installed in said additional game apparatus;
said additional game apparatus is adapted to instruct said opponent character to take a competitive action for a match against said player's character and set a level of an attribute about said competitive action; and
said image display control means is operable to instruct said display unit to display an image having a same event as that in a display unit of said additional game apparatus.

4. The game apparatus as defined in any one of claims 1 to 3, wherein:
said mounting surface is formed to allow said card to be slidingly moved therealong in at least a primary direction; and
said action-setting means is operable to set said attribute about the action of said player's character at one of said levels depending on a card-slid position where said card is slidingly moved.

5. The game apparatus as defined in claim 4, wherein:
said mounting surface has a reference card-mounting position marked on an approximately central region thereof, said mounting surface being formed to allow said card to be slidingly moved therealong in a reciprocating manner with respect to said primary direction; and
said action-setting means is operable, when said card is mounted at said reference card-mounting position, to set said attribute about the action of said player's character at an intermediate one of said levels.

6. The game apparatus as defined in claim 4, wherein said mounting surface is provided with a guide member which protrudes therefrom to assist the sliding movement of said card in at least said primary direction.

7. The game apparatus as defined in claim 6, wherein said guide member consists of a pair of convex strip-shaped members extending along said primary direction in spaced-apart relation to each other by a width dimension of said card.

8. The game apparatus as defined in claim 1, wherein:
said card has a position recognition mark which is marked on a specific region of a first one of opposite surfaces thereof;
said position detection section includes an image sensor adapted to pick up an image of said first surface of said card mounted on said mounting surface, and an image pickup processing section adapted to determine an image pickup position of said position recognition mark, based on said image picked up by said image sensor, and detect the card-mounted position on said mounting surface, based on said determined image pickup position.

9. The game apparatus as defined in claim 8, wherein:
said position detection section includes an infrared light-emitting section adapted to emit infrared light onto said first surface of said card mounted on said mounting surface;
said position recognition mark of said card is marked using a material capable of reflecting or absorbing infrared light in a manner opposite to that in the remaining region except said specific region of said first surface; and
said image sensor is provided with a filter adapted to allow said image sensor to be sensible to infrared light or insensible to only infrared light.

10. The game apparatus as defined in claim 1, which is designed to configure a game by a series of sequences, and obtain a game result depending on a content of said series of sequences, wherein one instruction for said action given from said action-setting means corresponds one of said sequences during said game.

11. The game apparatus as defined in claim 10, wherein:
said card includes a plurality of cards each having different movement data;
said mounting surface is formed to allow said plurality of cards to be mounted thereon; and
said action-setting means is operable to set a mode of said action to each of said cards in a given sequential order with respect to each of said sequences.

12. The game apparatus as defined in claim 1, wherein said game is configured to simulate a baseball, and said player's character is configured to simulate a pitcher, wherein:
said action-setting means is operable, according to the card-mounted position detected by said position detection section, to set a pitched-ball speed of a ball character configured to simulate a ball to be thrown by said player's character, as a level of an attribute representing a pitching power of said player's character.

13. The game apparatus as defined in claim 1, wherein said game is configured to simulate a baseball, and said player's character is configured to simulate a hitter, wherein:
said action-setting means is operable, according to the card-mounted position detected by said position detection section, to set a swing speed of a bat character configured to simulate a bat to be swung by said player's character, as a level of an attribute representing a swing power of said player's character.

14. A method for controllably executing a game by a computer of a game apparatus which includes a card-mounting section having a mounting surface for mounting thereon a card with a predetermined shape, and a position detection section adapted to detect a card-mounted position where said card is mounted on said mounting surface, in such a manner as to display a player's character and an opponent character on a display unit, and allow the player's character to take an action for a match according to an instruction from the player based on the mounting of said card relative to said mounting surface, to thereby obtain a result according to a predetermined rule, said method comprising:
storing, in a storage section, an action of said player's character, and an attribute defining a mode of the action of said player's character in a plurality of preset levels, in associated relation, according to an operation of storage control means; and
setting said attribute corresponding to an action of said player's character instructed by said player, at one of said levels, depending on the card-mounted position detected by said position detection section, according to an operation of action-setting means.
